# EUROPÄISCHE PATENTSCHRIFT

(11) **EP 1 079 209 B1**
(45) Veröffentlichungstag und Bekanntmachung des Hinweises auf die Patenterteilung: **09.04.2008**
(21) Anmeldenummer: 00115358.4
(22) Anmeldetag: 15.07.2000
(51) Int. Cl.: G01D 13/22, G01D 5/26

(54) **Zeigerinstrument**
Pointer instrument
Instrument d'affichage avec un index

(30) Priorität: 24.08.1999 DE 19940155
(43) Veröffentlichungstag der Anmeldung: 28.02.2001
(73) Patentinhaber: Optrex Europe GmbH, 64832 Babenhausen (DE)
(72) Erfinder: Schill, Eberhard, 65835 Liederbach (DE)
(74) Vertreter: KEIL & SCHAAFHAUSEN Patentanwälte

(56) Entgegenhaltungen:
- EP-A- 0 917 977
- US-A- 4 761 715
- US-A- 5 353 735
- PATENT ABSTRACTS OF JAPAN vol. 012, no. 473 (P-799), 12. Dezember 1988 (1988-12-12) & JP 63 193012 A (KANTO SEIKI CO LTD), 10. August 1988 (1988-08-10)

## Beschreibung

Die Erfindung betrifft ein Zeigerinstrument mit einem von einem Lichtbündel gebildeten Lichtzeiger zur Anzeige eines veränderlichen Wertes einer Meßgröße und einer eine Skalierung für den Lichtzeiger aufweisenden Anzeigefläche, wobei das Lichtbündel von der einem Betrachter abgewandten Rückseite der Anzeigefläche her durch diese hindurchtretbar, auf der Vorderseite der Anzeigefläche in Richtung auf diese umlenkbar und an der Anzeigeoberfläche den Lichtzeiger bildend reflektierbar ist.

Derartige Zeigerinstrumente sind als Bestandteil von Kombinationsinstrumenten in Kraftfahrzeugen bekannt z.B. aus EP0197977, JP63193012 und US4761715. Dabei wird mittels einer Laserdiode auf der Rückseite der Anzeigefläche ein Laserstrahl erzeugt, der durch die Anzeigefläche hindurchgeleitet wird und auf der Vorderseite der Anzeigefläche mit Hilfe eines Umlenkprismas auf diese gerichtet wird. Dadurch ist auf der Anzeige ein in etwa punktförmiger Zeiger erkennbar. Nachteilig ist bei diesem Instrument, daß entweder - bei einem starren Umlenkprisma - nur eine Markierung an einem fest vorgegebenen Ort ein- oder ausschaltbar ist oder das Umlenkprisma mit einer aufwendigen, die Anzeigefläche durchgreifenden oder auf deren Vorderseite angeordneten Antriebsmechanik versehen werden muß, damit der Zeiger bewegbar und somit zur Darstellung veränderbarer Meßgrößen geeignet ist. Sowohl wegen des damit verbundenen, für eine Serienfertigung des Zeigerinstruments inakzeptabel hohen Aufwands als auch wegen des erforderlichen, insbesondere in Kraftfahrzeugen aufgrund begrenzter Raumverhältnisse nur eingeschränkt zur Verfügung stehenden Bauvolumens, konnten sich die bekannten Zeigerinstrumente bisher nicht durchsetzen.

Darüber hinaus gibt es bereits analoge Anzeigeinstrumente, bei denen ein von einer die Anzeigefläche durchgreifenden Welle angetriebener Zeiger vor der Anzeigefläche bewegbar ist. Vor allem in Kombination mit einer elektrooptischen Anzeige als Anzeigefläche ergeben sich hierbei erhebliche Probleme, da die Anzeigefläche ohne Schädigung ihrer elektrischen und optischen Struktur von einer Zeigerwelle durchgriffen werden muß.

Der Erfindung liegt daher die Aufgabe zugrunde, ein Zeigerinstrument der eingangs genannten Art zu liefern, das sowohl einfach und kostengünstig im Aufbau ist als auch gleichzeitig ein geringes Einbauvolumen bei hoher Anzeigevariabilität gewährleistet.

Diese Aufgabe wird erfindungsgemäß dadurch gelöst, daß das Lichtbündel auf der Rückseite der Anzeigefläche mittels einer Bewegungseinrichtung entsprechend dem Wert der anzuzeigenden Meßgröße auslenkbar ist. Damit durchgreifen keine mechanischen Bauteile die Anzeigefläche, diese kann eine störungsfreie homogene Struktur aufweisen. Durch die Darstellung des Lichtzeigers auf der Anzeigefläche ist eine unter allen Blickwinkeln parallaxefreie Ablesung des Instruments sichergestellt. Da nur eine minimale, zwingend erforderliche Anzahl beweglicher Bauelemente vorzusehen ist, weist das erfindungsgemäße Zeigerinstrument zudem eine sehr hohe Betriebssicherheit und eine lange Lebensdauer auf. Gleichzeitig führt die damit verbundene Kompaktheit des Instruments zu einem nur geringen Einbauvolumen, wobei dennoch eine hohe Anzeigevariabilität beispielsweise durch einfache Änderung der Zeigerdarstellung oder ein fallweises Ein- und Ausblenden des Zeigers gegeben ist.

Gemäß einer vorteilhaften Weiterbildung der Erfindung ist die Anzeigefläche ein Zifferblatt, wodurch übliche Anzeigeinstrumente in einfacher Weise auf ein erfindungsgemäßes Zeigerinstrument mit einem Lichtzeiger umgerüstet werden können. Von besonderem Vorteil ist es aber weiterhin, wenn die Anzeigefläche eine elektrooptische Anzeige zur Darstellung veränderbarer Informationen ist. Hierdurch können zusätzlich zum Lichtzeiger weitere, die Informationsvielfalt und -dichte erhöhende Meldungen mit dem erfindungsgemäßen Instrument dargestellt werden. Die elektrooptische Anzeige wird dabei lediglich optisch von dem Lichtbündel durchgriffen, so daß nur aufwendig herzustellende Ausnehmungen (z.B. Bohrungen) und Schädigungen der Struktur der Anzeigefläche vermieden werden.

Insbesondere bei in großen Serien zu fertigenden erfindungsgemäßen Zeigerinstrumenten ist es von besonderem Vorteil, wenn die elektrooptische Anzeige ein Flüssigkristallbildschirm ist. Flüssigkristallbildschirme (LCDs) sind vergleichsweise kostengünstig, robust und zur Wiedergabe nahezu beliebiger optischer Informationen geeignet. Gemäß einer anderen vorteilhaften Weiterbildung der Erfindung ist daher die Skalierung mittels der elektrooptischen Anzeige darstellbar. Damit kann ohne zusätzlichen Aufwand eine Anzeige der Skalierung auf die Orte beschränkt bleiben, an denen sie zu einem bestimmten Zeitpunkt zur Ablesung eines mit dem Lichtzeiger dargestellten Wertes erforderlich ist. Zu anderen Zeiten steht die Anzeigefläche für weitere Meldungen zur Verfügung.

Die Herstellung und der Aufbau des erfindungsgemäßen Zeigerinstruments wird gemäß einer anderen vorteilhaften Weiterbildung der Erfindung jedoch weiter vereinfacht, wenn zumindest ein Teil der Skalierung auf die Anzeigefläche aufgedruckt ist.

Es ist vorstellbar, daß die Anzeigefläche des erfindungsgemäßen Zeigerinstruments ganzflächig eine hohe Transmission aufweist. Jedoch sind dann auch hinter der Anzeigefläche angeordnete Bauelemente wie z.B. Leiterplatten oder Beleuchtungseinrichtungen für den Betrachter sichtbar. Da dadurch die Ablesbarkeit des Instruments beeinträchtigt werden kann, ist es von besonderem Vorteil, wenn die Anzeigefläche in einem Bereich, in dem das Lichtbündel durch die Anzeigefläche hindurchtritt, eine höhere Transmission aufweist als in einem Bereich, durch den das Lichtbündel nicht hindurchtritt. Damit ist zugleich sichergestellt, daß die Lichtstärke des Lichtbündels durch den Durchtritt durch die Anzeigefläche nicht in unerwünscht hohem Maße abnimmt. Die Ablesbarkeit des Instruments verbessernd ist der Lichtzeiger somit mit hoher Leuchtstärke darstellbar.

Vorteilhaft ist es gemäß einer anderen Weiterbildung der Erfindung, wenn die Transmission der Anzeigefläche in einem Bereich, durch den das Lichtbündel hindurchtretbar ist, schaltbar ist. Auf diese Weise kann durch eine einfache Transmissionsänderung der Anzeigefläche die Leuchtstärke des Lichtzeigers variiert werden.

Vorzugsweise ist dabei die Transmission der Anzeigefläche in dem schaltbaren Bereich zwischen mindestens in etwa 90 % und höchstens in etwa 10 % schaltbar. Damit kann der Zeiger entweder mit voller Intensität dargestellt oder andernfalls ausgeblendet werden, wodurch die Anzeigefläche für andere Informationen zur Verfügung steht. Dabei kann zugelassen werden, daß die Transmission im eingeschalteten Zustand des Zeigers 100 % nicht erreicht und im ausgeschalteten Zustand des Zeigers nicht auf 0 % absinkt; diese Grenztransmissionen wären überhaupt nur mit erheblichem technischen Aufwand zu erreichen.

Man könnte sich eine spiegelnde Anzeigefläche vorstellen, auf der dann der Lichtzeiger nur unter einem bestimmten Blickwinkel - allerdings mit hoher Leuchtstärke - sichtbar wäre. Um hingegen eine gute Ablesbarkeit unter einem großen Blickwinkelbereich, wie sie z.B. bei Verwendung des erfindungsgemäßen Zeigerinstrumentes in Kraftfahrzeugen erforderlich ist, zu gewährleisten, ist es jedoch von besonderem Vorteil, wenn die Anzeigeoberfläche im Bereich des Lichtzeigers diffus streuend ist.

Grundsätzlich sind beliebige Bewegungseinrichtungen zur Auslenkung des Lichtbündels verwendbar. Jedoch vor allem bei einem Großserieneinsatz des erfindungsgemäßen Zeigerinstruments insbesondere in Fahrzeugen ist es von Vorteil, wenn die Bewegungseinrichtung kostengünstig ein Meßwerk aufweist. Alternativ weist die Bewegungseinrichtung vorzugsweise einen Schrittmotor auf, wodurch eine noch präzisere Ansteuerung des Instruments möglich wird.

Gemäß einer anderen vorteilhaften Weiterbildung der Erfindung ist der Lichtzeiger ein Linearzeiger, der geradlinig entlang einer ebenfalls geradlinigen Skala bewegbar ist. Damit wird für den Betrachter die Abschätzung der relativen Größe des angezeigten Meßwerts vereinfacht.

Hingegen ist das Zeigerinstrument besonders gut bei auch nur kurzzeitigem Blickkontakt in seiner Gesamtheit erfaßbar, wenn der Lichtzeiger vorteilhaft ein Rotationszeiger ist.

Es wäre vorstellbar, das Lichtbündel von einer beliebig anzuordnenden Lichtquelle beispielsweise mittels Lichtleitern dem Zeigerinstrument zuzuleiten und in dieses einzukoppeln. Jedoch sind dabei vergleichsweise aufwendige, gegeneinander bewegbare Lichtein- und -auskoppelelemente erforderlich. Daher ist es von besonderem Vorteil, wenn das Zeigerinstrument eine das Lichtbündel erzeugende Lichtquelle aufweist. Die Lichtquelle weist vorteilhaft eine lichtemittierende Diode auf, wodurch sich eine besonders hohe Energieausbeute und nur vergleichsweise geringe unerwünschte Abwärme ergibt.

Das Licht des Lichtbündels kann beliebig sein, sofern es vom menschlichen Auge wahrnehmbar ist. Gemäß einer weiteren vorteilhaften Ausgestaltung der Erfindung wird der Lichtzeiger jedoch besonders konturenscharf und mit großer Leuchtstärke dargestellt, wenn das Lichtbündel einen Laserstrahl aufweist. Dafür kann bspw. die lichtemittierende Diode eine Laserdiode sein.

Das Lichtbündel könnte z.B. durch die Änderung eines von ihm durchstrahlten Magnetfeldes oder durch bewegbare Spiegelflächen auslenkbar sein. Die Anordnung des erfindungsgemäßen Zeigerinstruments ist jedoch besonders einfach an individuelle Erfordernisse anpaßbar, wenn die Lichtquelle an einem von der Bewegungseinrichtung bewegbaren Halter angeordnet ist. Auf diese Weise kann sowohl die Lichtquelle an sich leicht ausgetauscht werden als auch ihre geometrische Anordnung im Zeigerinstrument den Bedürfnissen entsprechend variiert werden.

Bei einem als Rotationszeiger ausgebildeten Lichtzeiger ist es vorteilhaft, wenn die Lichtquelle exzentrisch zur Schwenkachse des Lichtzeigers angeordnet ist, so daß bei einer Bewegung der Lichtquelle um die (virtuelle) Zeigerschwenkachse ein gleichförmiger, lediglich seine Position ändernder Lichtzeiger dargestellt wird.

Dabei weist das Lichtbündel beim Durchtritt durch die Anzeigefläche einen geringstmöglichen Leuchtstärkeverlust auf und sind die Lichtumlenkflächen einfach zu gestalten, wenn gemäß einer anderen vorteilhaften Weiterbildung der Erfindung das Lichtbündel in etwa senkrecht durch die Anzeigefläche hindurchtretbar ist.

Auf der Vorderseite der Anzeigefläche könnte das Lichtbündel beispielsweise durch Brechung in einem inhomogenen Umlenkkörper in Richtung auf die Anzeigefläche umlenkbar sein. Jedoch läßt sich die Umlenkung in einem besonders kleinen Raum durchführen, wobei gleichzeitig nur geringe Intensitätsverluste des Lichtbündels auftreten, wenn vorteilhaft auf der Vorderseite der Anzeigefläche eine sich linear erstreckende, das Lichtbündel auf die Anzeigefläche umlenkende Reflexionsfläche angeordnet ist. Eine solche lineare Reflexionsfläche bietet sich insbesondere für einen Linearzeiger an; dabei erstreckt sich die Reflexionsfläche vorzugsweise in etwa parallel zu der Skalierung.

Bei einem Rotationszeiger ist es hingegen von besonderem Vorteil, wenn eine entsprechende Reflexionsfläche als auf der Vorderseite der Anzeigefläche sich kegelförmig erstreckende, das Lichtbündel auf die Anzeigefläche umlenkende Reflexionsfläche angeordnet ist. Gemäß einer anderen vorteilhaften Weiterbildung der Erfindung ist dabei die Mittelachse eines von der Reflexionsfläche gebildeten Kegels oder Kegelstumpfes kongruent mit der Schwenkachse der Lichtquelle. Bei dieser Ausführungsform fallen Kegelmittelachse, Zeigerschwenkachse und Lichtquellenschwenkachse eine sehr kleinräumige Anordnung schaffend zusammen. Dabei ist die Lichtquelle der Reflexionskegelmantelfläche gegenüberliegend angeordnet.

Bei einer einfachen Ausführungsform ist die Reflexionsfläche im Querschnitt geradlinig ausgebildet. Gemäß einer anderen vorteilhaften Weiterbildung der Erfindung ist die Reflexionsfläche im Querschnitt hingegen gewölbt. Dadurch kann die Zeigerform individuellen Erfordernissen angepaßt werden; z.B. ist durch die Wahl einer konkaven oder konvexen Wölbung die Länge des Zeigers verringer- oder vergrößerbar.

Besonders geringe Lichtverluste treten bei der Lichtumlenkung auf, wenn gemäß einer weiteren vorteilhaften Ausgestaltung der Erfindung die Reflexionsfläche verspiegelt ist.

Eine besonders geringe Bauteilanzahl und einfache Montage des Zeigerinstrumentes ergibt sich, wenn die Reflexionsfläche vorteilhaft eine Au-ßenfläche eines auf die Anzeigefläche aufgesetzten Prismas ist. Zu seiner Fixierung ist das Prisma beispielsweise einfach auf die Anzeigefläche geklebt.

Die Erfindung läßt verschiedenste Ausführungsformen zu. Zur weiteren Verdeutlichung ihres Grundprinzips sind zwei davon in der Zeichnung dargestellt und werden nachfolgend beschrieben. In der Zeichnung zeigt
- Figur 1: ein erfindungsgemäßes Zeigerinstrument in vereinfachter Schnittdarstellung und
- Figur 2: ein ähnliches erfindungsgemäßes Zeigerinstrument in vereinfachter Explosionsdarstellung.

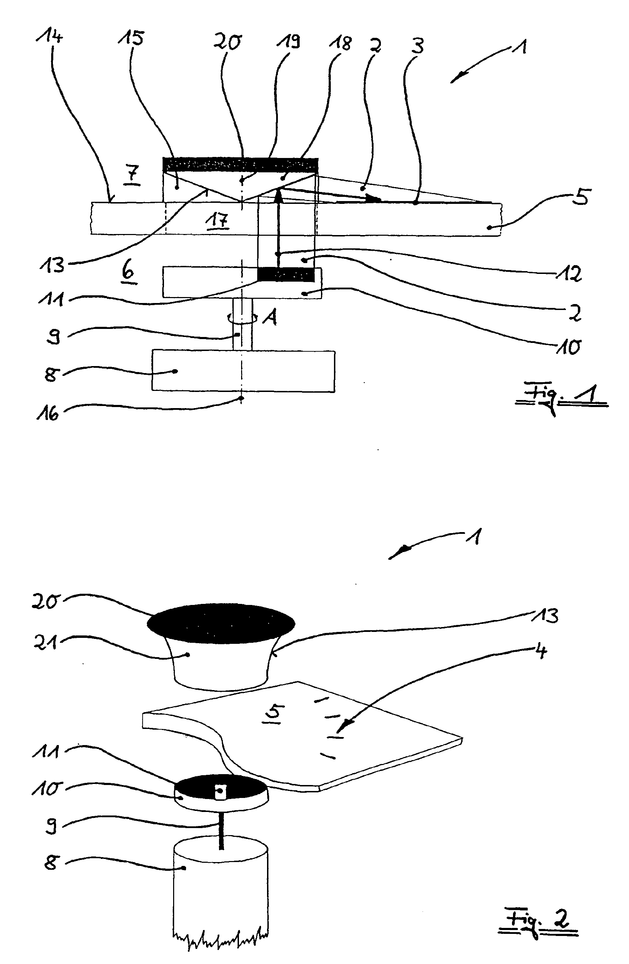

Figur 1 zeigt ein Zeigerinstrument 1, das Bestandteil eines hier nicht weiter dargestellten Kombinationsinstrumentes eines Kraftfahrzeuges ist. Zur Anzeige der Änderung einer Meßgröße weist das Zeigerinstrument 1 einen Schrittmotor 8 mit einer um eine Schwenkachse 16 drehbaren Antriebswelle 9 auf. An ihrem einer Anzeigefläche 5 zugewandten Ende weist die Antriebswelle 9 einen Halter 10 auf. An dem Halter 10 ist exzentrisch zur Schwenkachse 16 eine Lichtquelle 11 in Form einer LED angeordnet.

Ein auf der einem Betrachter abgewandten Rückseite 6 der Anzeigefläche 5 von der Lichtquelle 11 abgestrahltes Lichtbündel 2 durchdringt die Anzeigefläche 5 je nach Schwenkstellung (Bewegungsrichtung A) der Antriebswelle 9 mit dem Halter 10 und der darauf angeordneten Lichtquelle 11 in einem gestrichelt eingezeichneten ringförmigen Durchtrittsbereich 17 der Anzeigefläche 5.

Auf der Vorderseite 7 der Anzeigefläche 5 ist ein Prisma 15 mit einer zentrischen, kegelförmigen Ausnehmung 18 angeordnet. Die Mittelachse 19 des kegelförmigen Prismas 15 ist dabei deckungsgleich mit der Schwenkachse 16 des Halters 10. Ferner ist das Prisma 15 klebend auf dem Durchtrittsbereich 17 der Anzeigefläche 5 angeordnet.

Am Beispiel eines eingezeichneten Lichtstrahls 12 des Lichtbündels 2 ist erkennbar, daß das von der Lichtquelle 11 abgestrahlte Licht nach Durchtritt durch die Anzeigefläche 5 und Eintritt in das Prisma 15 an einer von einer Außenfläche des Prismas 15 gebildeten Reflexionsfläche 13 in Richtung auf eine Anzeigeoberfläche 14 der Anzeigefläche 5 umgelenkt wird. Durch Streuung des Lichts an der Anzeigeoberfläche 14 ist für den Betrachter ein Lichtzeiger 3 erkennbar. Zum Vermeiden von die Ablesbarkeit erschwerendem Streulicht ist das Prisma 15 betrachterseitig mit einer lichtundurchlässigen Abdeckung 20 versehen.

Bei dem Ausführungsbeispiel nach Figur 1 ist die Anzeigefläche 5 als Flüssigkristallbildschirm (LCD) ausgebildet, auf dem unter anderem auch eine Skalierung für den Lichtzeiger 3 darstellbar ist. Die Transmission der Anzeigefläche 5 ist durch entsprechende Ansteuerung von im Durchtrittsbereich 17 angeordneten, hier nicht gezeigten Elektroden schaltbar. Auf diese Weise kann unabhängig von der Lichtquelle 11 der Durchtritt des Lichtbündels 2 durch die Anzeigefläche 5 gesperrt werden, z.B. um kurzfristig auf der gesamten Anzeigefläche 5 eine Warnmeldung darzustellen.

Ein ähnliches Zeigerinstrument 1 zeigt Figur 2. Hier ist auch eine auf einer Anzeigefläche 5 aufgedruckte Skalierung 4 zu erkennen, die aufgrund der dortigen Seitenansicht Figur 1 nicht zu entnehmen ist. Ein auf der Rückseite der Anzeigefläche 5 angeordnetes Meßwerk 8 treibt über eine Antriebswelle 9 einen exzentrisch mit einer eine Laserdiode aufweisenden Lichtquelle 11 versehenen Halter 10 an. Der Durchtritt des von der Lichtquelle 11 abgestrahlten Lichts erfolgt hier entsprechend dem in Figur 1 dargestellten Ausführungsbeispiel in etwa senkrecht durch die Anzeigefläche 5. Im Gegensatz zu der Ausführungsform nach Figur 1 wird hier das Lichtbündel auf der Vorderseite der Anzeigefläche 5 jedoch an einer Reflexionsfläche 13 in Richtung auf die Oberfläche der Anzeigefläche 5 umgelenkt, welche Reflexionsfläche 13 eine verspiegelte und konkav gewölbte Außenfläche eines sich in Richtung auf die Anzeigefläche 5 hin verjüngenden Kegelstumpfes 21 ist. Zu einem Betrachter hin ist der Kegelstumpf 21 mit einer Abdeckung 20 zur Abschirmung von Streulicht versehen. Mittels einer Verklebung wird der Kegelstumpf 21 an der Anzeigefläche 5 befestigt.

## Patentansprüche

1. Zeigerinstrument (1) mit einem von einem Lichtbündel (2) gebildeten Lichtzeiger (3) zur Anzeige eines veränderlichen Wertes einer Meßgröße und einer eine Skalierung (4) für den Lichtzeiger (3) aufweisenden Anzeigefläche (5), wobei das Lichtbündel (2) von der einem Betrachter abgewandten Rückseite (6) der Anzeigefläche (5) her durch diese hindurchtretbar, auf der Vorderseite (7) der Anzeigefläche (5) in Richtung auf diese umlenkbar und an der Anzeigeoberfläche (14) den Lichtzeiger (3) bildend reflektierbar ist, **dadurch gekennzeichnet, daß** das Lichtbündel (2) auf der Rückseite (6) der Anzeigefläche (5) mittels einer Bewegungseinrichtung (8) entsprechend dem Wert der anzuzeigenden Meßgröße auslenkbar ist.

2. Zeigerinstrument nach Anspruch 1, **dadurch gekennzeichnet, daß** die Anzeigefläche (5) ein Zifferblatt ist.

3. Zeigerinstrument nach Anspruch 1, **dadurch gekennzeichnet, daß** die Anzeigefläche (5) eine elektrooptische Anzeige zur Darstellung veränderbarer Informationen ist.

4. Zeigerinstrument nach Anspruch 3, **dadurch gekennzeichnet, daß** die elektrooptische Anzeige ein Flüssigkristallbildschirm ist.

5. Zeigerinstrument nach Anspruch 3 oder 4, **dadurch gekennzeichnet, daß** die Skalierung (4) mittels der elektrooptischen Anzeige darstellbar ist.

6. Zeigerinstrument nach einem der vorhergehenden Ansprüche, **dadurch gekennzeichnet, daß** zumindest ein Teil der Skalierung (4) auf die Anzeigefläche (5) aufgedruckt ist.

7. Zeigerinstrument nach einem der vorhergehenden Ansprüche, **dadurch gekennzeichnet, daß** die Anzeigefläche (5) in einem Bereich (17), in dem das Lichtbündel (3) durch die Anzeigefläche (5) hindurchtritt, eine höhere Transmission aufweist als in einem Bereich, durch den das Lichtbündel (3) nicht hindurchtritt.

8. Zeigerinstrument nach einem der vorhergehenden Ansprüche, **dadurch gekennzeichnet, daß** die Transmission der Anzeigefläche (5) in einem Bereich (17), durch den das Lichtbündel (2) hindurchtretbar ist, schaltbar ist.

9. Zeigerinstrument nach Anspruch 8, **dadurch gekennzeichnet, daß** die Transmission der Anzeigefläche (5) in dem schaltbaren Bereich (17) zwischen mindestens in etwa 90 % und höchstens in etwa 10 % schaltbar ist.

10. Zeigerinstrument nach einem der vorhergehenden Ansprüche, **dadurch gekennzeichnet, daß** die Anzeigeoberfläche (14) im Bereich des Lichtzeigers (3) diffus streuend ist.

11. Zeigerinstrument nach einem der vorhergehenden Ansprüche, **dadurch gekennzeichnet, daß** die Bewegungseinrichtung (8) ein Meßwerk aufweist.

12. Zeigerinstrument nach einem der Ansprüche 1 bis 10, **dadurch gekennzeichnet, daß** die Bewegungseinrichtung (8) einen Schrittmotor aufweist.

13. Zeigerinstrument nach einem der vorhergehenden Ansprüche, **dadurch gekennzeichnet, daß** der Lichtzeiger (3) ein Linearzeiger ist.

14. Zeigerinstrument nach einem der Ansprüche 1 bis 12, **dadurch gekennzeichnet, daß** der Lichtzeiger (3) ein Rotationszeiger ist.

15. Zeigerinstrument nach einem der vorhergehenden Ansprüche, **gekennzeichnet durch** eine das Lichtbündel (2) erzeugende Lichtquelle (11).

16. Zeigerinstrument nach Anspruch 15**, dadurch gekennzeichnet, daß** die Lichtquelle (11) eine lichtemittierende Diode aufweist.

17. Zeigerinstrument nach einem der vorhergehenden Ansprüche, **dadurch gekennzeichnet, daß** das Lichtbündel (2) einen Laserstrahl aufweist.

18. Zeigerinstrument nach einem der Ansprüche 15 bis 17, **dadurch gekennzeichnet, daß** die Lichtquelle (11) an einem von der Bewegungseinrichtung (8) bewegbaren Halter (10) angeordnet ist.

19. Zeigerinstrument nach Anspruch 14 und einem der Ansprüche 15 bis 18, **dadurch gekennzeichnet, daß** die Lichtquelle (11) exzentrisch zur Schwenkachse des Lichtzeigers (3) angeordnet ist.

20. Zeigerinstrument nach einem der vorhergehenden Ansprüche, **dadurch gekennzeichnet, daß** das Lichtbündel (2) in etwa senkrecht durch die Anzeigefläche (5) hindurchtretbar ist.

21. Zeigerinstrument nach einem der vorhergehenden Ansprüche, **dadurch gekennzeichnet, daß** auf der Vorderseite (7) der Anzeigefläche (5) eine sich linear erstreckende, das Lichtbündel (2) auf die Anzeigefläche (5) umlenkende Reflexionsfläche angeordnet ist.

22. Zeigerinstrument nach einem der Ansprüche 1 bis 20, **dadurch gekennzeichnet, daß** auf der Vorderseite (7) der Anzeigefläche (5) eine sich kegelförmig erstreckende, das Lichtbündel (2) auf die Anzeigefläche (5) umlenkende Reflexionsfläche (13) angeordnet ist.

23. Zeigerinstrument nach Anspruch 22, **dadurch gekennzeichnet, daß** die Mittelachse (19) eines von der Reflexionsfläche (13) gebildeten Kegels oder Kegelstumpfes (15; 21) kongruent ist mit der Schwenkachse (16) der Lichtquelle (11).

24. Zeigerinstrument nach einem der Ansprüche 21 bis 23, **dadurch gekennzeichnet, daß** die Reflexionsfläche (13) im Querschnitt gewölbt ist.

25. Zeigerinstrument nach einem der Ansprüche 21 bis 24, **dadurch gekennzeichnet, daß** die Reflexionsfläche (13) verspiegelt ist.

26. Zeigerinstrument nach einem der Ansprüche 21 bis 25, **dadurch gekennzeichnet, daß** die Reflexionsfläche eine Außenfläche eines auf die Anzeigefläche (5) aufgesetzten Prismas (15) ist.

## Claims

1. A pointer instrument (1) having a light pointer (3) formed by a pencil of rays (2) for displaying a variable value of a measured variable and a display surface (5) having a scale (4) for the light pointer (3), where the pencil of rays (2) can pass through the display surface (5) from a rear side (6) of the display surface (5) further from the observer, on the front side (7) of the display surface (5) can be deflected towards said display surface and can be reflected at the display surface (14), forming the light pointer (3),
**characterised in that** the pencil of rays (2) on the rear (6) of the display surface (5) can be deflected by means of a movement mechanism (8) according to the value of the measured variable to be displayed.

2. A pointer instrument according to Claim 1,
**characterised in that** the display surface (5) is a dial.

3. A pointer instrument according to Claim 1,
**characterised in that** the display surface (5) is an electrooptical display for representing changeable information.

4. A pointer instrument according to Claim 3,
**characterised in that** the electrooptical display is a liquid crystal screen.

5. A pointer instrument according to Claim 3 or 4,
**characterised in that** the scale (4) can be represented by means of the electrooptical display.

6. A pointer instrument according to one of the preceding Claims,
**characterised in that** at least a part of the scale (4) is printed onto the display surface (5).

7. A pointer instrument according to one of the preceding Claims,
**characterised in that** the display surface (5) in a region (17) in which the pencil of rays (3) passes through the display surface (5) has a higher transmission than in a region through which the pencil of rays (3) does not pass.

8. A pointer instrument according to one of the preceding Claims,
**characterised in that** the transmission of the display surface (5) in a region (17) through which the pencil of rays (2) can pass is switchable.

9. A pointer instrument according to Claim 8,
**characterised in that** the transmission of the display surface (5) in the switchable region (17) can be switched at least between approximately 90 % and at most approximately 10 %.

10. A pointer instrument according to one of the preceding Claims,
**characterised in that** the display surface (14) in the region of the light pointer (3) is diffusely scattering.

11. A pointer instrument according to one of the preceding Claims,
**characterised in that** the movement mechanism (8) comprises a measuring unit.

12. A pointer instrument according to one of Claims 1 to 10,
**characterised in that** the movement mechanism (8) comprises a stepping motor.

13. A pointer instrument according to one of the preceding Claims,
**characterised in that** the light pointer (3) is a linear pointer.

14. A pointer instrument according to one of Claims 1 to 12,
**characterised in that** the light pointer (3) is a rotating pointer.

15. A pointer instrument according to one of the preceding Claims,
**characterised by** a light source (11) producing the pencil of rays (2).

16. A pointer instrument according to Claim 15,
**characterised in that** the light source (11) comprises a light-emitting diode.

17. A pointer instrument according to one of the preceding Claims,
**characterised in that** the pencil of rays (2) comprises a laser beam.

18. A pointer instrument according to one of Claims 15 to 17,
**characterised in that** the light source (11) is disposed on a support (10) that can be moved by the movement mechanism (8).

19. A pointer instrument according to Claim 14 and one of Claims 15 to 18,
**characterised in that** the light source (11) is disposed eccentrically to the swivel axis of the light pointer (3).

20. A pointer instrument according to one of the preceding Claims,
**characterised in that** the pencil of rays (2) can pass roughly perpendicularly through the display surface (5).

21. A pointer instrument according to one of the preceding Claims,
**characterised in that** on the front side (7) of the display surface (5) there is disposed a linearly extending reflection surface that deflects the pencil of rays (2) onto the display surface (5).

22. A pointer instrument according to one of Claims 1 to 20,
**characterised in that** on the front side (7) of the display surface (5) there is disposed a conically extending reflection surface (13) that deflects the pencil of rays (2) onto the display surface (5).

23. A pointer instrument according to Claim 22,
**characterised in that** the centre axis (19) of a cone or truncated cone (15; 21) formed by the reflection surface (13) is congruent with the swivel axis (16) of the light source (11).

24. A pointer instrument according to one of Claims 21 to 23,
**characterised in that** the reflection surface (13) has a curved cross section.

25. A pointer instrument according to one of Claims 21 to 24,
**characterised in that** the reflection surface (13) is metallised.

26. A pointer instrument according to one of Claims 21 to 25,
**characterised in that** the reflection surface is an outer surface of a prism (15) placed onto the display surface (5).

## Revendications

1. Instrument d'affichage (1) muni d'un indicateur lumineux (3) formé par un faisceau lumineux (2) pour indiquer une valeur variable d'une grandeur de mesure et d'une surface d'indication (5) présentant une échelle (4) pour l'indicateur lumineux (3), le faisceau lumineux (2) pouvant être réfléchi depuis le côté arrière (6) de la surface d'indication (5) opposé à un observateur en traversant celle-ci, pouvant être réfléchi en étant dévié du côté avant (7) de la surface d'indication (5) en direction de celle-ci et pouvant être réfléchi sur le plan d'indication (14) en formant l'indicateur lumineux (3), **caractérisé en ce que** le faisceau lumineux (2) peut être détourné du côté arrière (6) de la surface d'indication (5) au moyen d'un dispositif de mouvement (8) en fonction de la valeur de la grandeur de mesure à indiquer.

2. Instrument d'affichage selon la revendication 1, **caractérisé en ce que** la surface d'indication (5) est un cadran.

3. Instrument d'affichage selon la revendication 1, **caractérisé en ce que** la surface d'indication (5) est un affichage électro-optique pour représenter des informations variables.

4. Instrument d'affichage selon la revendication 3, **caractérisé en ce que** l'affichage électro-optique est un écran à cristaux liquides.

5. Instrument d'affichage selon la revendication 3 ou 4, **caractérisé en ce que** l'échelle (4) peut être représentée au moyen de l'affichage électro-optique.

6. Instrument d'affichage selon l'une des revendications précédentes, **caractérisé en ce qu'**au moins une partie de l'échelle (4) est imprimée sur la surface d'indication (5).

7. Instrument d'affichage selon l'une des revendications précédentes, **caractérisé en ce que** la surface d'indication (5) présente une transmission plus élevée dans une zone (17) dans laquelle le faisceau lumineux (3) traverse la surface d'indication (5) que dans une zone dans laquelle le faisceau lumineux (3) ne la traverse pas.

8. Instrument d'affichage selon l'une des revendications précédentes, **caractérisé en ce que** la transmission de la surface d'indication (5) est commutable dans une zone (17) au travers de laquelle passe le faisceau lumineux (2).

9. Instrument d'affichage selon la revendication 8, **caractérisé en ce que** la transmission de la surface d'indication (5) dans la zone commutable (17) peut être commutée entre au moins environ 90 % et au plus environ 10 %.

10. Instrument d'affichage selon l'une des revendications précédentes, **caractérisé en ce que** le plan d'indication (14) au niveau de l'indicateur lumineux (3) est dispersif de façon diffuse.

11. Instrument d'affichage selon l'une des revendications précédentes, **caractérisé en ce que** l'instrument de mouvement (8) est muni d'un élément de mesure.

12. Instrument d'affichage selon l'une des revendications 1 à 10, **caractérisé en ce que** l'instrument de mouvement (8) est muni d'un moteur pas à pas.

13. Instrument d'affichage selon l'une des revendications précédentes, **caractérisé en ce que** l'indicateur lumineux (3) est un indicateur linéaire.

14. Instrument d'affichage selon l'une des revendications 1 à 12, **caractérisé en ce que** l'indicateur lumineux (3) est un indicateur rotatif.

15. Instrument d'affichage selon l'une des revendications précédentes, **caractérisé par** une source lumineuse (11) qui génère le faisceau lumineux (2).

16. Instrument d'affichage selon la revendication 15, **caractérisé en ce que** la source lumineuse (11) est munie d'une diode électroluminescente.

17. Instrument d'affichage selon l'une des revendications précédentes, **caractérisé en ce que** le faisceau lumineux (2) présente un rayon laser.

18. Instrument d'affichage selon l'une des revendications 15 à 17, **caractérisé en ce que** la source lumineuse (11) est disposée sur un support (10) pouvant être déplacé par le dispositif de mouvement (8).

19. Instrument d'affichage selon la revendication 14 et l'une des revendications 15 à 18, **caractérisé en ce que** la source de lumière (11) est disposée excentriquement par rapport à l'axe de pivotement de l'indicateur lumineux (3).

20. Instrument d'affichage selon l'une des revendications précédentes, **caractérisé en ce que** le faisceau lumineux (2) peut traverser sensiblement perpendiculairement à la surface d'indication (5).

21. Instrument d'affichage selon l'une des revendications précédentes, **caractérisé en ce que** sur la face avant (7) de la surface d'indication (5) est disposée une surface de réflexion s'étendant de façon linéaire et détournant le faisceau lumineux (2) sur la surface d'indication (5).

22. instrument d'affichage selon l'une des revendications 1 à 20, **caractérisé en ce que** sur la surface avant (7) de la surface d'indication (5) est disposée une surface de réflexion (13) s'étendant de façon conique et détournant le faisceau lumineux (2) sur la surface d'indication (5).

23. Instrument d'affichage selon la revendication 22, **caractérisé en ce que** l'axe médian (19) d'un cône ou un tronc de cône (15 ; 21) formant la surface de réflexion (13) est congruent avec l'axe de pivotement (16) de la source de lumière (11).

24. Instrument d'affichage selon l'une des revendications 21 à 23, **caractérisé en ce que** la surface de réflexion (13) est en coupe cintrée.

25. Instrument d'affichage selon l'une des revendications 21 à 24, **caractérisé en ce que** la surface de réflexion (13) est munie d'une couche réfléchissante.

26. Instrument d'affichage selon l'une des revendications 21 à 25, **caractérisé en ce que** la surface de réflexion est la surface extérieure d'un prisme (15) placé sur la surface d'indication (5).
